# EUROPÄISCHE PATENTSCHRIFT

(11) **EP 2 159 466 B1**
(45) Veröffentlichungstag und Bekanntmachung des Hinweises auf die Patenterteilung: **19.12.2012**
(21) Anmeldenummer: 09168146.0
(22) Anmeldetag: 19.08.2009
(51) Int. Cl.: F16L 37/088

(54) **Steckverbindung für Rohrleitungen**
Plug coupling for pipes
Raccord détachable pour tuyaux

(30) Priorität: 27.08.2008 DE 102008039829; 27.05.2009 DE 102009022859
(43) Veröffentlichungstag der Anmeldung: 03.03.2010
(73) Patentinhaber: Johannes Schäfer vormals Stettiner Schraubenwerke GmbH & Co. KG, 35410 Hungen (DE)
(72) Erfinder: Funk, Hans Georg, 35410, Hungen (DE); Forro, Norbert, 35447, Reiskirchen (DE)
(74) Vertreter: Haar, Lucas Heinz Jörn

(56) Entgegenhaltungen:
- EP-A- 0 748 975
- EP-A1- 0 373 920
- EP-A1- 0 766 033
- EP-B- 0 932 789
- WO-A-2006/099155
- WO-A2-2006/099568
- DE-A1- 3 007 509
- DE-A1- 3 146 379
- US-A- 6 095 570
- US-A- 6 129 390
- US-A1- 2008 018 107

## Beschreibung

Die Erfindung betrifft eine Steckverbindung für Rohrleitungen mit einem Außenteil und einem Innenteil, die miteinander verbunden und voneinander getrennt werden können, wobei das Außenteil eine Öffnung und in der Öffnung eine Innenausnehmung aufweist, in der ein ringförmiges, in radialer Richtung elastisch verformbares Halteelement angeordnet ist, das Innenteil ein als Steckzapfen ausgebildetes Ende hat, das in die Öffnung des Außenteils einsteckbar ist und eine Außenausnehmung aufweist, in der, wenn das Innenteil mit dem Außenteil verbunden ist, ein ringförmiges, in radialer Richtung elastisch verformbares Abstützelement angeordnet ist, das mit einem radial äußeren Bereich aus der Außenausnehmung herausragt und eine Schulter bildet, an der das Halteelement derart abstützbar ist, dass der Steckzapfen gegen Herausziehen aus der Öffnung durch das Halteelement verriegelt ist.

Bei einer aus DE 0 932 789 A1 bekannten Steckverbindung der angegebenen Art wird das Abstützelement vor dem Einführen des Innenteils in die Öffnung des Außenteils auf den Steckzapfen aufgesteckt und auf dem Steckzapfen über eine Kegelfläche, durch die es aufgeweitet wird, bis zum Einrasten in eine Umfangsausnehmung geschoben, in die es mit geringer radialer Vorspannung eingreift. Erst nach diesem Montagevorgang wird der Steckzapfen in die Aufnahmebohrung des Außenteils gesteckt, wobei ein in einer Innenausnehmung des Außenteils angeordnetes Halteelement durch das Abstützelement aufgeweitet und in die Innenausnehmung verdrängt wird und nach Überspringen des Abstützelements in eine hinter diesem vorgesehene Ausnehmung des Steckzapfens einrastet. Die auf diese Weise bewirkte Verriegelung des Steckzapfens im Außenteil kann wieder gelöst werden, indem ein hülsenförmiges Entriegelungselement in die Aufnahmebohrung des Außenteils hineingedrückt wird, durch welches das Halteelement aufgeweitet und radial nach außen in die Innenausnehmung gedrückt wird, so dass der Steckzapfen zusammen mit dem Abstützelement und dem Entriegelungselement aus der Bohrung des Außenteils herausgezogen werden kann. Bei der bekannten Steckverbindung sind zum Aufweiten des Halteelements durch das Abstützelement beim Steckvorgang in Steckrichtung Kräfte aufzubringen, deren Größe als nachteilig angesehen wird.

WO2006/099155 offenbart eine weitere Steckverbindung der eingangs angegebenen Art, bei welcher ein ringförmiges Abstützelement in einer Außenausnehmung des Innenteils und ein ringförmiges Halteelement in einer Innenausnehmung des Außenteils angeordnet ist. Beim Zusammenstecken überspringt das aufgeweite Halteelement das Abstützelement und rastet hinter diesem in die Außenausnenmung des Innenteils ein. Zum Lösen der Steckverbindung treibt ein Lösemechanismus das Halteelement gegen das Abstützelement, durch welches das Halteelement in die Innenausnehmung des Außenteits aufgeweitet wird.

Bei einer aus EP 0 748 975 A bekannten Steckverbindung gemäß dem Oberbegriff des Patentanspruchs 1 ist in der Öffnung eines zweiteiligen Außenteils eine Innenausnehmung gebildet, in welcher zwei Ringe gleicher Größe, die als Halteelement und Abstützelement dienen, nebeneinander liegend aufgenommen sind. Das in Steckrichtung vordere Ende des Steckzapfens hat eine konische Zentrierfläche durch welche beide Ringe nacheinander aufgeweitet werden, wenn der Steckzapften in die Öffnung des Außenteils eingesteckt wird. In der endgültigen Steckposition rasten beide Ringe in eine Außenausnehmung des Steckzapfens ein. Zum Lösen der Steckverbindung werden die beiden Teile des Außenteils voneinander getrennt.

Aus US 5 042 848 ist weiterhin eine Steckverbindung bekannt, bei der in einer Ringausnehmung eines Außenteils ein radial aufweitbares Halteelement angeordnet ist, das aus mehreren im Abstand voneinander angeordneten Ringelementen besteht, die durch achsparallele Stege mit einem außerhalb des Aufnahmeteils angeordneten Ring verbunden sind. Das rohrförmige Innenteil weist eine Ringnut auf, in die die Ringelemente des Halteelements in der Verriegelungsstellung einrasten. Das Halteelement dieser bekannten Steckverbindung hat eine komplizierte Formgestalt und ist teuer in der Herstellung. Außerdem erfordert die Aufnahme große Haltekräfte, einen verhältnismäßig großen Querschnitt der Ringelemente und dementsprechend eine relativ tiefe Nut im Innenteil.

Bei einer aus DE 101 25 499 C1 bekannten Steckverbindung ist in der Bohrung des Außenteils eine Zentrierhülse verschiebbar gelagert, die in den Haltering eingreift und den Haltering in der Innenausnehmung zentriert, wobei der Haltering vorzugsweise mit radialer Vorspannung an der Zentrierhülse anliegt. Die Zentrierhülse benötigt Bauram in radialer Richtung und erfordert einen Montageschritt zum Verbinden von Haltering und Zentrierhülse.

Bei einer weiteren aus EP 0 718 538 A1 bekannten Steckverbindung ist ein in einer Ringkammer eines Gehäuseteils gelagertes, den Haltering bezüglich der Steckachse zentrierendes Positionierelement vorgesehen, das zum Zwecke der Zentrierung an mindestens drei Stellen am Umfang des Halterings anliegt und diesen an eine Kegelfläche am Rande der Ringkammer andrückt, wodurch der Haltering bezüglich der Steckachse zentriert wird. Hierbei ist das Positionierelement derart federelastisch ausgebildet, dass es beim Einsteckvorgang durch elastische Verformung ein radiales Aufweiten sowie ein anschließendes Zurückfedern des Halterings ermöglicht.

Bei einer weiteren aus der EP 0 898 109 A1 bekannten Steckverbindung ist zur Zentrierung eines zweiter Halteelements in Form eines geschlitzten Federdrahtrings, der in einer Ausnehmung des Innenteils angeordnet ist, in einer Ringnut in der Ausnehmung ein Elastomerring angeordnet, durch den der Federdrahtring zentrisch zur Steckachse in Anlage an einer die Ausnehmung entgegen der Steckrichtung begrenzenden Wand festgehalten wird.

Aus EP 0 932 789 B1 ist eine Steckverbindung für Rohrleitungen bekannt, bei der das Innenteil auf seiner Außenseite eine Ringnut hat, in der ein geschlitzter Ring angeordnet ist, der etwa zur Hälfte aus der Ringnut herausragt. Der Ring bildet ein Abstützelement für das ebenfalls aus einem geschlitzten Ring bestehende Halteelement, das in einer Innenausnehmung in der Bohrung des Außenteils angeordnet ist.

Bei einer anderen aus US 2008/0018107 A1 bekannten Steckverbindung mit einem eine Innenausnehmung aufweisenden Außenteil und einem in das Außenteil einsteckbaren Innenteil sind auf dem Innenteil in Steckrichtung hintereinander eine Verriegelungshülse mit einer konischen, sich in Steckrichtung verjüngenden Endfläche, ein an der Endfläche anliegendes, ringförmiges Halteelement und ein in einer Außenausnehmung des Innenteils angeordnetes, ringförmiges Abstützelement angeordnet. Die Einstecköffnung im Außenteil ist hierbei so groß bemessen, dass das Innenteil mit dem Abstützelement, dem Haltelement und der Verriegelungshülse bis zum Erreichen einer Anschlagstellung in das Außenteil einsteckbar ist. Um danach Innenteil und Außenteil miteinander zu verriegeln, wird durch tieferes Hineindrücken der Verriegelungshülse in das Außenteil das Halteelement auf einen größeren Durchmesser aufgeweitet, wodurch es in eine Sperrstellung gelangt, in der es das Abstützelement an einer Seitenwand der Innenausnehmung derart abstützt, dass das Innenteil gegen Herausziehen aus der Öffnung des Außenteils verriegelt ist. Durch Anbringung eines Sicherungsrings auf dem Innenteil wird dann die Verriegelungshülse in der Sperrstellung gesichert.

Das Dokument US 2008/0018107 A1 offenbart somit eine Steckverbindung für Rohrleitungen mit einem Außenteil und einem Innenteil, die miteinander verbunden und voneinander getrennt werden können, wobei das Außenteil eine Öffnung und In der Öffnung eine Innenausnehmung aufweist, in der, wenn das Innenteil mit dem Außenteil verbunden ist, ein ringförmiges, in radialer Richtung elastisch verformbares Halteelement und ein ringförmiges, in radialer Richtung elastisch verformbares Abstutzelement angeordnet sind, das Innenteil ein als Steckzapfen ausgebildetes Ende hat, das in die Öffnung des Außenteils einsteckbar ist und eine Außenausnehmung aufweist, in der Außenausnehmung, wenn das Innenteil mit dem Außenteil verbunden ist, das ringförmige, in radialer Richtung elastisch verformbare Abstützelement angeordnet ist, das mit einem radial äußeren Bereich aus der Außenausnehmung herausragt und eine Schulter bildet, an der das Halteelement derart abstützbar ist, dass der Steckzapfen gegen Herausziehen aus der Öffnung durch das Halteelement verriegelt ist, wobei die Innenausnehmung so groß bemessen ist, dass das Halteelement und das Abstützelement gemeinsam von der Innenausnehmung aufgenommen werden können, wenn der Steckzapfen des Innenteils sich teilweise mit dem Abschnitt, der in Steckrichtung vor der Außenausnehmung liegt, und teilweise mit der Außenausnehmung durch die Innenausnehmung erstreckt, wobei das in Steckrichtung vordere Ende des Steckzapfens eine konische Zentrierfläche hat, die sich nach vorne verjüngt und deren kleinster Durchmesser kleiner ist als der kleinste Durchmesser des Abstützelements, wobei das Halteelement einen Innendurchmesser hat, der gleich oder etwas kleiner ist als der Außendurchmesser des Steckzapfens, so dass das Halteelement das Bestreben hat den Steckzapfen im Bereich seines Außendurchmessers eng anliegend oder mit geringer Vorspannung zu umgreifen, wobei das Abstützelement einen Innendurchmesser hat, der kleiner ist als der Innendurchmesser des Halteelements und wobei das Halteelement in der Verriegelungsstellung an dem Abstützelement und an der die Innenausnehmung entgegen der Einsteckrichtung des Steckzapfens begrenzenden, vorderen Seitenwand der Innenausnehmung anliegt, wobei die vordere Seitenwand der Innenausnehmung, welche die Innenausnehmung entgegen der Einsteckrichtung begrenzt, eine Hohlkegelfläche ist, deren Durchmesser in der Einsteckrichtung zunimmt.

Der Erfindung liegt die Aufgabe zugrunde, eine Steckverbindung der eingangs genannten Art zu schaffen, die sich durch niedrige Steckkräfte auszeichnet. Es ist weiterhin Aufgabe der Erfindung, eine Steckverbindung der angegebenen Art weiter zu vereinfachen und den Kostenaufwand für Herstellung und Montage zu reduzieren.

Die Aufgabe wird erfindungsgemäß durch eine Steckverbindung mit den in Patentanspruch 1 angegebenen Merkmalen gelöst.

Die Steckverbindung nach der Erfindung hat den Vorteil, dass das Abstützelement und das Halteelement gemeinsam in die Innenausnehmung im Außenteil eingesetzt werden können. Das Abstützelement wird jeweils zweckmäßig in Steckrichtung hinter dem Halteelement angeordnet. Wird anschließend das Innenteil mit seinem Steckzapfen in das Außenteil gesteckt, so ist es lediglich erforderlich, das Abstützelement mit Hilfe der Zentrierfläche des Steckzapfens aufzuweiten und den Steckzapfen soweit durch das Abstützelement zu schieben, bis das in der Innenausnehmung gehaltene Abstützelement in die Außenausnehmung des Steckzapfens einrastet. Die hierzu erforderlichen Axialkräfte sind deutlich niedriger als die Axialkräfte, die benötigt werden um das Abstützelement durch das Halteelement hindurchzudrücken. Mit der erfindungsgemäßen Gestaltung wird somit eine Verringerung der Steckkräfte ermöglicht.

Das Kombinieren von Halteelement und Abstützelement hat den Vorteil, dass größere Maßunterschiede zwischen dem Außendurchmesser des Innenteils und dem Innendurchmesser des Außenteils zugelassen werden können, wodurch die Herstellung vereinfacht und der Steckvorgang erleichtert wird. Weiterhin kann ein Ringspalt zwischen Außenteil und Innenteil vorgesehen werden, dessen Größe ausreicht, um eine dünnwandige Lösehülse zum Lösen der Steckverbindung in das Außenteil einzuführen.

Die Erfindung hat weiterhin des Vorteil, dass eine Vormontage des Abstützelements auf dem Innenteil entfallen kann. Die Vormontage des Abstützelements und des Halteelements beschränkt sich daher auf das Außenteil, so dass ein separater Vormontageschritt am Innenteil und damit verbundene Kosten eingespart werden können. Die erfindungsgemäße Gestaltung eignet sich daher besonders für Steckverbindungen, bei denen das Innenteil ein gezogenes Rohr ist und durch Kaltverformen des Rohres die Außenausnehmung gebildet ist. Bei der Formung der Außenausnehmung kann auch vorgesehen sein, dass der Außendurchmesser des als Steckzapfen ausgebildeten Endes des gezogenen Rohrs auf ein genaues Passungsmaß kalibriert wird. Derartige Fertigungsschritte werden üblicherweise vollautomatisch durchgeführt und eignen sich daher weniger für die Integration von Montageschritten wie das Einsetzen des Abstützelements in die Außenausnehmung.

Nach einem weiteren Vorschlag der Erfindung kann die Steckverbindung in der Innenausnehmung in Einsteckrichtung gesehen hinter dem Halteelement bzw. dem Abstützelement ein axial bewegliches Stützelement und hinter dem Stützelement einen elastisch verformbaren Dichtring aufweisen, der sich radial an einer Wand und in Einsteckrichtung an einer Schulter der Innenausnehmung abstützt und der zur Abdichtung des Innenteils im Außenteil ausgebildet ist, wobei der Abstand zwischen der Schulter und der Hohlkegelfläche des Außenteils und die axialen Abmessungen von Halteelement, Stützelement und Dichtring so aufeinander abgestimmt sind, dass das Halteelement, das Stützelement und der Dichtring spielfrei aneinander anliegend von der Schulter und der Hohlkegelfläche gehalten sind.

Die Steckverbindung nach der Erfindung hat den Vorteil, dass zur Zentrierung des Halteelements und auch des Abstützelements kein zusätzliches Element erforderlich ist. Das Zentrieren der Elemente wird allein durch den an der Schulter abgestützten Dichtring und das diesem üblicherweise zugeordnete Stützelement bewirkt, indem der Dichtring über das Stützelement das Abstützelement an dem Halteelement und letzteres an der Hohlkegelfläche des Außenteils anliegend oder angedrückt hält. Das Zentrieren der beiden Elemente erleichtert das Stecken und verhindert, dass sich die Elemente beim Steckvorgang verklemmen können. Ein weiterer Vorteil ist, dass das Außenteil in axialer Richtung recht kurz und platzsparend ausgeführt werden kann und dass auch der Durchmesser des Außenteils im Vergleich zum Dichtdurchmesser des Innenteils verhältnismäßig klein bemessen sein kann. Die erfindungsgemäße Steckverbindung eignet sich daher besonders zur Herstellung eines Adapterelements, das in ein genormtes Anschlusselement mit 24° Konusbohrung einsetzbar und mittels einer Überwurfmutter an dem Anschlusselement befestigbar ist

Das Halteelement der Steckverbindung kann ein geschlitzter Ring, insbesondere aus Metall, sein. Besonders vorteilhaft ist es, wenn das Halteelement aus einem geschlitzten ersten Ring und einem geschlitzten zweiten Ring besteht, wobei der erste Ring einen Außendurchmesser hat, der größer ist, und einen Innendurchmesser, der kleiner ist als der Außendurchmesser des zweiten Rings und wobei der erste Ring an der Hohlkegelfläche anliegt und der zweite Ring zwischen dem ersten Ring und dem Stützelement angeordnet ist.

Das Stützelement kann erfindungsgemäß eine dem Dichtring benachbarte Stützscheibe aus Kunststoff und eine dem Halteelement benachbarte Distanzscheibe aus Metall aufweisen. Die Stützscheibe aus Kunststoff ermöglicht geringere Spaltmaße, während die Distanzscheibe aus Metall höhere Flächenpressungen zwischen dem Stützelement und dem Halteelement erlaubt.

Das Außenteil kann erfindungsgemäß so gestaltet sein, dass die Hohlkegelfläche von einer Stirnwand des Außenteils gebildet ist, die im Anschluss an das Einsetzen des Halteelements, des Stützelements und des Dichtrings durch radiales plastisches Umformen des Außenteils gebildet ist. Dies hat den Vorteil, dass die Innenausnehmung zunächst als einseitige, offene Axialbohrung hergestellt werden kann und dass Dichtring, Stützelement und Halteelement sehr einfach in die Innenausnehmung eingesetzt werden können. Erst durch die anschließende Umformung der zunächst zylindrischen Wand in die Stirnwand mit Hohlkegelfläche wird die Innenausnehmung auf der Einsteckseite geschlossen. Wird das Außenteil mittels einer Überwurfmutter an einem Anschlussteil befestigt, so kann vorgesehen sein, dass die Überwurfmutter an der Außenseite der Stirnwand anliegt. Durch die Abstützung an der Überwurfmutter kann die Stirnwand dünner und damit leichter verformbar ausgeführt sein.

Die Erfindung wird nachfolgend anhand eines Ausführungsbeispiels näher erläutert, das in der Zeichnung dargestellt ist. Es zeigen
- Figur 1: ein Außenteil einer Steckverbindung nach der Erfindung halbseitig geschnitten,
- Figur 2: ein Innenteil einer Steckverbindung nach der Erfindung, halbseitig geschnitten,
- Figur 3: das Außenteil gemäß Figur 1 und das Innenteil gemäß Figur 2 in der Verriegelungsstellung,
- Figur 4: das Lösen der Verbindung von Außenteil und Innenteil mittels Lösewerkzeug.
- Figur 5: einen Längsschnitt einer Steckverbindung nach der Erfindung, in der linken Hälfte mit angefangenem und in der rechte Hälfte mit vollendetem Steckvorgang,
- Figur 6: einen Montageschritt und
- Figur 7: einen Verformungsschritt zur Herstellung des Außenteils der Steckverbindung gemäß Figur 1.

Die in der Zeichnung dargestellte Steckverbindung umfasst ein Innenteil 1, ein Außenteil 2, ein Halteelement 3 und ein Abstützelement 4, durch welche das Innenteil 1 und das Außenteil 2 miteinander verbindbar sind. Das Innenteil 1 besteht aus einem mit einem Druckmedium beaufschlagbaren Rohr, dessen dargestelltes Ende zur Bildung eines Steckzapfens 5 einen auf ein genaues Passungsmaß kalibrierten Außendurchmesser hat. Das in Steckrichtung vordere Ende des Steckzapfens 5 ist auf seiner Außenseite mit einer kegelige Zentrierfläche 6 versehen, deren Durchmesser zum vorderen Ende hin abnimmt. Im Bereich seines hinteren Drittels weist der Steckzapfen 5 eine Außenausnehmung 7 auf, die durch Kaltverformen gebildet ist und einen halbkreisförmigen Querschnitt hat. Der kleinste Durchmesser der Zentrierfläche 6 ist kleiner als der Innendurchmesser des Abstützelements 4.

Das Außenteil 2 weist zur Aufnahme des Steckzapfens 5 eine durchgehende Aufnahmebohrung 10 mit einem vorderen Bohrungsabschnitt 11 und einem hinteren Bohrungsabschnitt 12 auf. Der Bohrungsabschnitt 1 hat einen größeren Innendurchmesser als der Bohrungsabschnitt 12 und sein Innendurchmesser ist an den Außendurchmesser des Steckzapfens 5 angepasst. Der Bohrungsabschnitt 12 befindet sich im Wesentlichen in einem als Schlauchtülle 13 ausgebildeten Teil des Außenteils 2, der zum Anschluss an eine Druckmittelleitung dient. In dem Bohrungsabschnitt 11 sind eine Innenausnehmung 14 und beiderseits der Innenausnehmung 14 und in einem Abstand von dieser Dichtringnuten 15, 16 vorgesehen. Die Dichtringnut 15 befindet sich an der Einstecköffnung der Aufnahmebohrung 10 und ist nach Außen durch einen kegeligen Wandabschnitt 17 begrenzt,. In den Dichtringsnuten 15, 16 befinden sich Dichtringe 18 , 19. Die Innenausnehmung 14 hat in Steckrichtung gesehen als vordere Seitenwand eine vordere Anlagefläche 20 und als hintere Seitenwand eine hintere Anlagefläche 21, die durch eine konkav gekrümmte Übergangsfläche stufenlos miteinander in Verbindung stehen. Die vordere Anlagefläche 20 ist eine Hohlkegelfläche, deren Durchmesser in Einsteckrichtung des Steckzapfens 5 zunimmt und die vorzugsweise in einem Winkel von 30° zur Längsachse geneigt ist. Die hintere Anlagefläche 21 ist ebenfalls als Kegelfläche mit einer zur Anlagefläche 20 entgegengesetzten Neigung von 80° zur Längsachse ausgebildet. Die Anlagefläche 21 könnte jedoch auch steiler, d.h. mit größerer Neigung oder als Radialfläche ausgebildet sein.

Zwischen der Dichtringnut 15 und der Innenausnehmung 14 ist der Innendurchmesser der Aufnahmebohrung auf ein Maß vergrößert, das nur geringfügig größer ist als der Außendurchmesser, den das Abstützelement 4 hat, wenn es in der Außenausnehmung 7 des Steckzapfens 5 angeordnet ist. Der vergrößerte Innendurchmesser ist notwendig, damit der Steckzapfen 5 gemeinsam mit dem in der Außenausnehmung 7 angeordneten Abstützelement 4 aus dem Außenteil 2 entnommen werden kann.

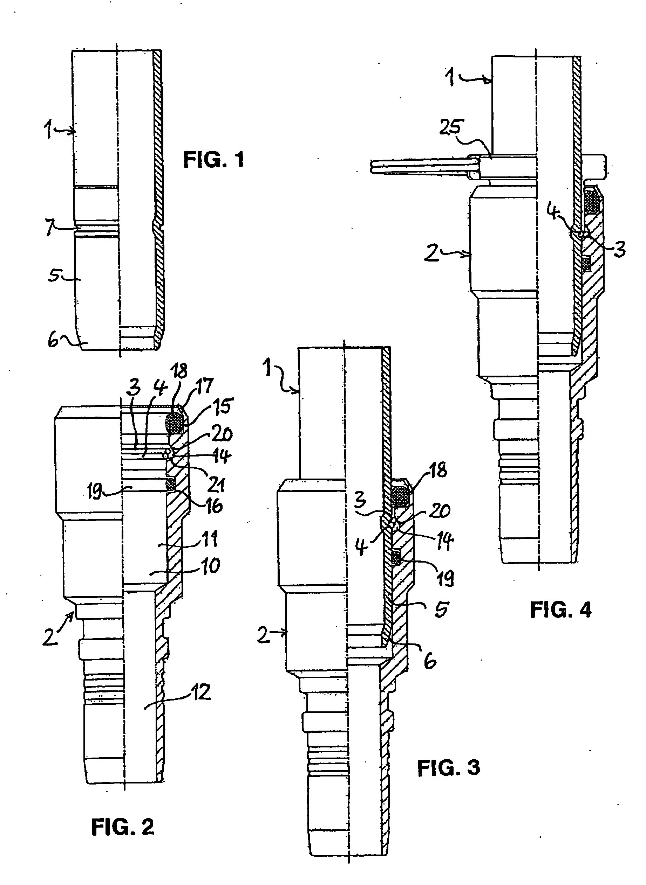

Wie Figur 2 zu entnehmen, sind in der Innenausnehmung 14 das Halteelement 3 und das Abstützelement 4 angeordnet, wobei sich das Abstützelement 4 in Steckrichtung hinter dem Halteelement 3 befindet. Das Halteelement 3 und das Abstützelement 4 sind als geschlitzte Runddraht-Sprengringe ausgebildet und können z.B. aus rostfreiem Federstahl, Federbronze oder auch Kunststoff bestehen. Das Halteelement 3 hat einen Innendurchmesser, der gleich oder etwas kleiner ist als der Außendurchmesser des Steckzapfens 5, so dass das Halteelement 3 das Bestreben hat den Steckzapfen 5 eng anliegend oder mit geringer Vorspannung zu umgreifen. Das Abstützelement 4 hat einen Innendurchmesser, der geringfügig kleiner ist als der kleinste Durchmesser der Außenausnehmung 7, so dass das Abstützelement 4 mit geringer Vorspannung an der Wand der Außenausnehmung 7 anliegt.

Zum Verbinden des Innenteils 1 mit dem Außenteil 2 wird der Steckzapfen 5 in die Aufnahmebohrung 10 des Außenteils 2 gesteckt, das, wie in Figur 2 gezeigt, in der Innenausnehmung 14 das Halteelement 3 und das Abstützelement 4 enthält. Bei diesem Vorgang wird durch die Zentrierfläche 6 zunächst der Dichtring 18 aufgeweitet. Anschließend bewirkt die Zentrierfläche 6 die Zentrierung des Halteelements 3 und des Abstützelements 4 und die radiale Aufweitung des Abstützelements 4, wodurch dieses vollständig in die Innenausnehmung 14 hineingedrängt wird. Das weitere Vorschieben des Steckzapfens 5 bewirkt dann die Aufweitung des Dichtrings 19, wobei der Steckzapfen 5 mit seiner Mantelfläche an dem Dichtring 19, dem Halteelement 3 und dem Abstützelement 4 entlang gleitet. Das Eindringen des Steckzapfens 5 in die Aufnahmebohrung 10 endet sobald die Außenausnehmung 7 das an der Anlagefläche 21 anliegende Abstützelement 4 erreicht, so dass dieses in die Außenausnehmung 7 einrastet und dadurch den Steckzapfen 5 festhält. In der Gegenrichtung stützt sich, wie in Figur 3 gezeigt, das Abstützelement 4 an dem Halteelement 3 und dieses wiederum an der Anlagefläche 20 ab, so dass der Steckzapfen 5 formschlüssig mit dem Außenteil 2 verriegelt ist.

Ein Lösen der verriegelten Steckverbindung ist nur möglich, wenn, wie in Figur 4 gezeigt, ein hülsenförmiges, geteiltes Lösewerkzeug 25 auf das Innenteil 1 aufgesetzt und in die Aufnahmebohrung 10 des Außenteils 2 hineingedrückt wird. Hierbei wird durch das Lösewerkzeug 25 das Halteelement 3 durch die auf das Lösewerkzeug 25 einwirkende Druckkraft radial aufgeweitet und auf das Abstützelement 4 gedrückt, so dass anschließend der Steckzapfen 5 zusammen mit dem Abstützelement 4 durch das in der Innenausnehmung 14 zurückbleibende Halteelement 3 nach außen aus der Aufnahmebohrung 10 heraus gezogen werden kann. Bei diesem Lösevorgang verbleibt das Abstützelement 4 in der Außenausnehmung 7 des Steckzapfens 5.

Für das erneute Einstecken des Steckzapfens 5 kann das Halteelement 3 in der Innen ausnehmung 14 bleiben, denn beim Hineindrücken des Steckzapfens mit montiertem Abstützelement 4 kann durch das Abstützelement 4 das Halteelement 3 erneut aufgeweitet werden und bedingt durch die Neigung der Anlagefläche 21 kann das Abstützelement 4 soweit durch das Halteelement 3 hindurch gedrückt werden, dass das Halteelement 3 aufgrund seiner Federwirkung wieder in die in Figur 3 gezeigte Verriegelungsposition springt. Allerdings ist für das Erreichen der Verriegelungsstellung mit auf dem Steckzapfen 5 montierte Abstützelement 4 eine höhere Steckkraft erforderlich als beim Stecken mit im Außenteil angeordneten Abstützelement 4.

Um im Rahmen der Erfindung zu bleiben, wird jedoch nach dem Lösen der Steckverbindung das Abstützelement 4 von dem Steckzapfen 5 gelöst und erneut in die Innenausnehmung 14 im Außenteil eingesetzt, so dass der Steckvorgang wie oben in Verbindung mit den Figuren 1 bis 3 beschrieben durchgeführt werden kann.

Unterbleibt versehentlich das Einsetzen des Halteelements 3 oder des Abstützelements 4 in die Innenausnehmung 14, so ist eine Verriegelung des Steckzapfens 5 im Außenteil 2 nicht möglich. Dies kann leicht durch Auseinanderziehen von Innenteil 1 und Außenteil 2 festgestellt werden. Eine Fehlbedienung ist daher nicht möglich. Wurde versehentlich das Abstützelement 4 in Steckrichtung vor dem Halteelement 3 angeordnet, so ist ein Ineinanderstecken und Verriegeln der Steckverbindung gleichwohl möglich, da das Abstützelement 4 in jedem Fall in die Außenausnehmung 7 einrastet und dann durch das Halteelement 3 hindurchgedrückt werden kann. Allerdings erfordert in diesem Fall der Steckvorgang, wie oben beschrieben eine etwas höhere Steckkraft.

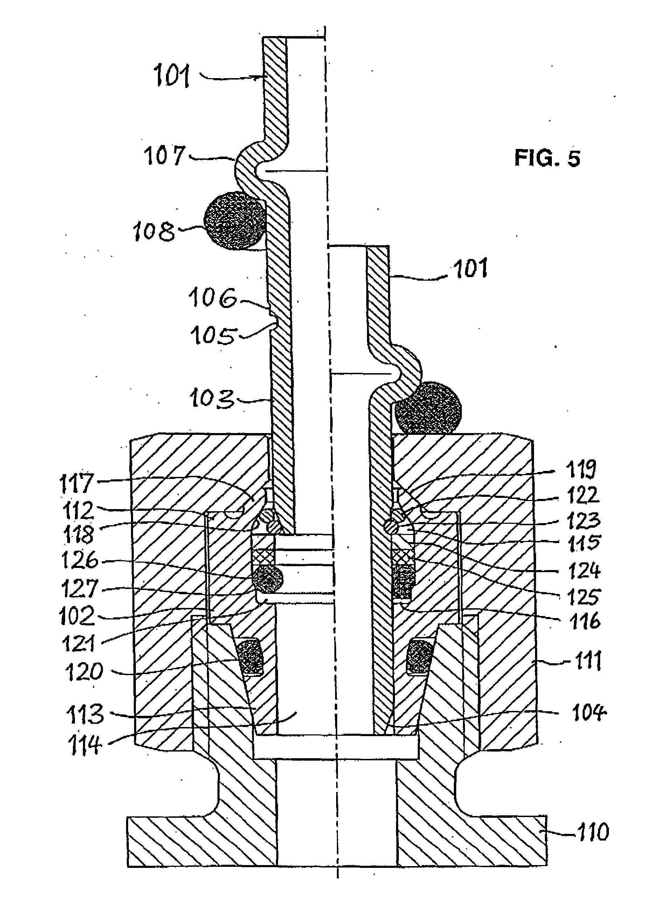

Die in Figur 5 dargestellte Steckverbindung weist ein Innenteil 101 und ein Außenteil 102 auf, die ineinander steckbar sind. Das Innenteil 101 ist durch den Endabschnitt eines Rohres gebildet und an seinem Einsteckende 103 mit einer Zentrierfläche 104 versehen. In einem ersten Abstand von der Zentrierfläche 104 hat das Innenteil eine ringförmige Außenausnehmung 105, die einen halbkreisförmigen Querschnitt hat und zur Aufnahme eines Halteelements dient. Bei Bedarf kann zwischen der Außenausnehmung 105 und der Zentrierfläche 104 eine zweite Außenausnehmung zur Bildung einer Sicherungsraste vorgesehen werden. Der Außendurchmesser des Innenteils 101 ist zwischen der Zentrierfläche 104 und der Außenausnehmung 105 und in einem sich an letztere anschließenden, eine Anlagefläche 106 bildenden Abschnitt kalibriert. Bei diesem Vorgang wird der anfängliche Außendurchmesser um 0,2 mm auf ein vorgegebenes genaues Maß reduziert und zu große Durchmesserunterschiede werden beseitigt. Das Innenteil 101 weist ferner von dem Einsteckende 103 aus gesehen hinter der Anlagefläche 106 und in einem Abstand von dieser ein Widerlager 107 auf, das durch eine nach außen gewölbte Stauchung des Rohres gebildet ist. Das Widerlager 107 dient zur Abstützung einer aus einem O-Ring bestehenden Axialfeder 108, die auf der dem Einsteckende zugekehrten Seite des Widerlagers 107 angeordnet ist.

Das Außenteil 102 ist als Adapter ausgebildet, der in eine genormte Konusbohrung von 24° eines Anschlussstücks 110 eingesetzt und mittels einer Überwurfmutter 111 an dem Anschlussstück 110 befestigt werden kann. Die Überwurfmutter 111 kann eine Standardüberwurfmutter sein, sie kann aber auch eine Sonderausführung mit verlängerter Bohrung zum Führen des Innenteils sein. Die Spannfläche auf der Innenseite der Überwurfmutter kann, wie in Figur 1 gezeigt, teils zylindrisch und teils konisch oder durchgehend konisch sein, wobei die Gegenfläche des Außenteils jeweils entsprechend angepasst ist.

Das Außenteil 102 hat einen zylindrischen Abschnitt 112 und einen von diesem durch eine Stufe abgesetzten Konusabschnitt 113. Durch beide Abschnitte erstreckt sich eine Bohrung 114 mit einer im Bereich des Abschnitts 112 radial erweiterten Innenausnehmung 115, die an ihrem dem Konusabschnitt 113 benachbarten Ende von einer radialen Anlagefläche 116 und am entgegengesetzten Einsteckende von einer durch eine Stirnwand 117 gebildeten Hohlkegelfläche 118 begrenzt wird. Auf der Außenseite bildet die Stirnwand 117 einen 45°-Konus 119, der an einer entsprechend geneigten Innenkonusfläche der Überwurfmutter 111 anliegt. Angrenzend an den Konusabschnitt 113 und den Konus 119 weist der zylindrische Abschnitt 112 ebene Spannflächen auf, an denen er zwischen dem Anschlussstück 110 und der Überwurfmutter 111 festspannbar ist. Zur Abdichtung gegenüber dem Anschlussstück 110 ist in einer Ringnut des Konusabschnitts 113 ein Dichtring 120 angeordnet.

In der Innenausnehmung 115 befinden sich nebeneinander ein ringförmiges Haltelement 122, ein ringförmiges Abstützelement 123, eine Distanzscheibe 124, eine Stützscheibe125 und ein als O-Ring ausgebildeter Dichtring 126. Der Haltering 122 liegt in zentrierter Lage an der Hohlkegelfläche 118 an und wird in dieser Lage durch den Dichtring 126 gehalten, der sich an einer nach innen in die Innenausnehmung 115 vorspringenden Schulter 127 abstützt, die sich in solcher Nähe der Anlagefläche 116 befindet, dass zwischen dem Dichtring 126 und der Anlagefläche 116 ein kleiner Freiraum 121 verbleibt. Die Abstützkraft des Dichtrings 126 wird über die Stützscheibe 125, die Distanzscheibe 124 und den Abstützring 123 auf den Haltering 122 übertragen. Der Haltering122 und der Abstützring 123 bilden zusammen ein Halteelement, durch welches das Innenteil 101 im Außenteil 102 festgehalten werden kann. Beide Ringe sind als geschlitzte Federdrahtringe ausgeführt und haben den gleichen Drahtdurchmesser. Der Haltering 122 hat einen Innendurchmesser, der im Wesentlichen gleich dem Außendurchmesser der Anlagefläche 106 ist. Der Abstützring 123 hat einen Innendurchmesser, der etwa um den Betrag des Drahtdurchmessers kleiner ist als der Innendurchmesser des Halterings 122. Aufgrund der bestehenden Durchmesserunterschiede ragt der Abstützring 123 teilweise in den Haltering 122 hinein und wird dadurch in einer zum Haltering 122 zentrierten Lage gehalten. Die Zentrierung der Distanzscheibe 124 und der Stützscheibe 125 erfolgt an der Innenwand der Innenausnehmung 115.

Die zentrierte Lage von Haltering 122 und Abstützring 123 ist für das störungsfreie Stecken des Innenteils 1 besonders wichtig. Insbesondere bei einem aus zwei Ringen gebildeten Halteelement kann der kleinere Abstützring 123 bei unzureichender Zentrierung so weit außermittig angeordnet sein, dass er das Einstecken des Innenteils 101 verhindert. Sind Haltering 122 und Abstützring 123 richtig zentriert, so kann das Innenteil 101, wie in Figur 5 gezeigt, beim Einstecken mit seiner Zentrierfläche 104 in die Ringe 122,123 eindringen und den an der Distanzscheibe 124 abgestützten Abstützring 123 auf den Außendurchmesser des Einsteckendes 103 aufweiten. Mit fortschreitendem Eindringen des Innenteils 101 in das Außenteil 102 gleiten dann der Haltering 122 und der Abstützring 123 auf dem Innenteil 101 entlang, bis sie die in der rechten Hälfte von Figur 5 gezeigte Endposition einnehmen. In dieser Position ist der Abstützring 123 in die Außenausnehmung 105 eingerastet und der an der Anlagefläche 106 anliegende Haltering 122 stützt sich am Abstützring 123 und in der Gegenrichtung an der Hohlkegelfläche 118 der Stirnwand 117 ab. Die Axialfeder 108 ist hierbei zwischen der Stirnseite der Überwurfmutter 111 und dem Widerlager 107 eingespannt und hält die Verbindung spielfrei.

Bei dem Einstecken des Innenteils 101 wurde auch der Dichtring 126 radial aufgeweitet und dadurch verformt. Das dabei verdrängte Dichtringvolumen kann in den Freiraum 121 zwischen der Schulter 127 und der Anlagefläche 116 ausweichen, wodurch eine zu hohe Pressung und Beschädigung des Dichtrings 126 vermieden wird.

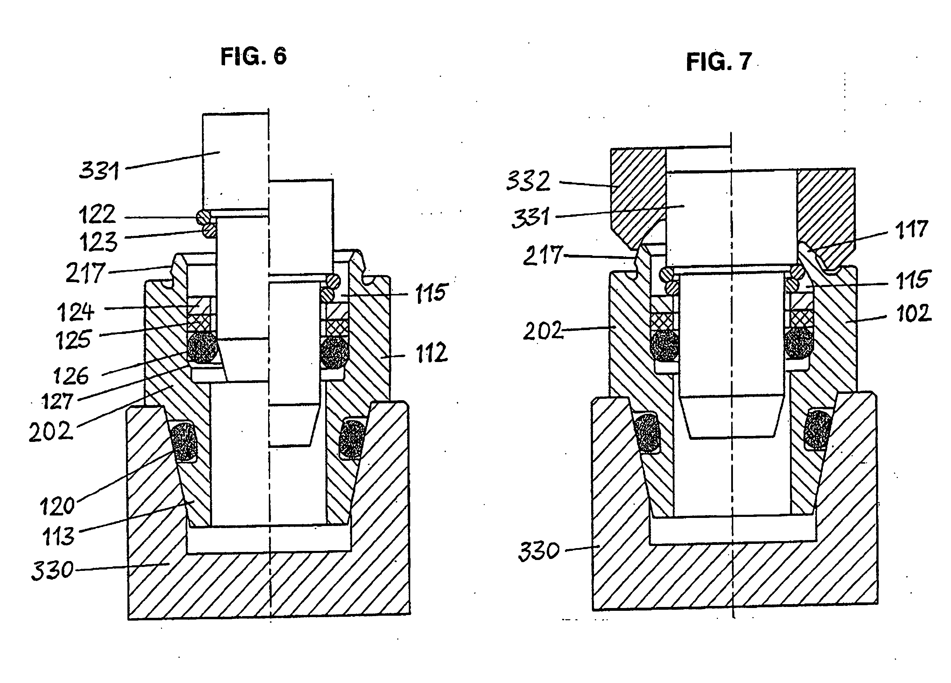

Die Figuren 6 und 7 veranschaulichen die einfache Herstellung und Montage des Außenteils 102 und der in der Innenausnehmung 115 angeordneten Elemente. Der in Figur 6 gezeigte Rohling 202 des Außenteils 102 ist ein einfaches Drehteil ohne Hinterstiche, welches kostengünstig als Automatenteil gefertigt werden kann. Zur Bildung der Stirnwand 117 weist der Rohling auf der dem Konusabschnitt 113 entgegengesetzten Seite einen Kragen 217 auf, der sich in Verlängerung der Innenwand der Innenausnehmung 115 axial erstreckt und dadurch eine Öffnung bildet, durch die der Dichtring 126, die Stützscheibe 125, die Distanzscheibe 124 und auch der Abstützring 123 und der Haltering 122 leicht in die Innenausnehmung 115 eingesetzt werden können.

Für die Montage ist, wie in Figur 6 gezeigt, der Rohling 202 mit dem Konusabschnitt 113 in einem Werkzeug-Unterteil 330 gehalten und der Dichtring 126, die Stützscheibe 125 und die Distanzscheibe 124 werden zunächst nacheinander von oben in die Innenausnehmung 115 eingelegt. Anschließend wird von oben ein Montagebolzen in die Innenausnehmung 115 eingeführt, auf dem der Abstützring 123 und der Haltering 122 angeordnet und durch Klemmung gehalten sind. Der Montagebolzen 331 wird bis in die in der rechten Hälfte von Figur 6 gezeigte axiale Endposition gebracht, in der der Dichtring 126 an der Schulter 127 anliegt. Im nächsten Schritt wird, wie in Figur 7 gezeigt, ein Bördelwerkzeug 332 angesetzt und in Richtung des Werkzeug-Unterteils 330 bewegt. Durch das Bördelwerkzeug 332 wird der Kragen 217 radial nach innen so weit verformt, bis er mit seinem inneren Rand fest an dem Abschnitt größeren Durchmessers des Montagebolzens 331 anliegt. Ein hierdurch bewirkter Anstieg der Verformungskraft kann als Zeichen für die Beendigung des Bördelvorgangs dienen. Der umgebördelte Kragen 217 bildet nun die Stirnwand 117, welche die Innenausnehmung 115 auf der Einsteckseite verschließt und innen die Hohlkegelfläche 118 aufweist, an der sich der Haltering 122 abstützt. Nach dem Bördeln werden das Bördelwerkzeug 332 und der Montagebolzen 331 entfernt und der Herstellvorgang ist beendet. Die in der Innenausnehmung 115 befindlichen Teile sind in der Innenausnehmung 115 zentriert und werden durch die Axialkraft des Dichtrings 126 bis zur Montage des Innenteils 101 in zentrierter Lage gehalten.

## Patentansprüche

1. Steckverbindung für Rohrleitungen mit einem Außenteil (2) und einem Innenteil (1, 101), die miteinander verbunden und voneinander getrennt werden können, wobei
das Außenteil (2, 202) eine Öffnung (10) und in der Öffnung (10) eine Innenausnehmung (14, 115) aufweiset, in der vor dem Verbinden des Innenteils (1, 101) mit dem Außenteil (2) ein ringförmiges, in radialer Richtung elastisch verformbares Halteelement (3, 122) und ein ringförmiges, in radialer Richtung elastisch verformbares Abstützelement (4, 123) angeordnet sind,
das Innenteil (1, 101) ein als Steckzapfen (5) ausgebildetes Ende hat, das in die Öffnung (10) des Außenteils (2) einsteckbar ist und eine Außenausnehmung (7, 105) aufweist,
in der Außenausnehmung (7, 105), wenn das Innenteil (1, 101) mit dem Außenteil (2, 102) verbunden ist, das ringförmige, in radialer Richtung elastisch verformbare Abstützelement, (4, 123) angeordnet ist, das mit einem radial äußeren Bereich aus der Außenausnehmung (7, 105) herausragt und eine Schulter bildet, an der das Halteelement (3, 122) derart abstützbar ist, dass der Steckzapfen gegen Herausziehen aus der Öffnung (10) durch das Halteelement (3, 122) verriegelt ist,
die Innenausnehmung (14, 115) so groß bemessen ist, dass das Halteelement (3, 122) und das Abstützelement (4, 123) gemeinsam von der Innenausnehmung (14, 115) aufgenommen werden können, wenn der Steckzapfen des Innenteils (1, 101) sich mit dem Abschnitt, der in Steckrichtung vor der Außenausnehmung (4, 123), liegt, durch die . Innenausnehmung (14, 115) erstreckt und wobei das in Steckrichtung vordere Ende des Steckzapfens eine konische Zentrierfläche (6, 104) hat, die sich nach vorne verjüngt und deren kleinster Durchmesser kleiner ist als der kleinste Durchmesser des Abstützelements (4, 123), wobei das Halteelement (3, 122) einen Innendurchmesser hat, der gleich oder etwas kleiner ist als der Außendurchmesser des Steckzapfens (5), so dass das Haltelement (3, 122) das Bestreben hat den Steckzapfen (5) im Bereich seines Außendurchmessers eng anliegend oder mit geringer Vorspannung zu umgreifen, wobei das Abstützelement (4, 123) einen Innendurchmesser hat, der kleiner ist als der Innendurchmesser des Halteelements (3, 122) und geringfügig kleiner ist als der kleinste Durchmesser der Außenausnehmung (7, 105), so dass das Abstützelement (4, 123) in der Verriegelungsstellung In die Außenausnehmung (7, 105) einrastet und mit geringer Vorspannung an der Wand der Außenausnehrnung (7, 105) anliegt und wobei das Halteelement (3, 122) in der Verriegelungsstellung an dem Abstützelement (4, 123), an dem Steckzapfen (5) im Bereich seines Außendurchmessers und an der die Innenausnehmung (14, 115) entgegen der Einsteckrichtung des Steckzäpfens (5) begrenzenden, vorderen Seitenwand der Innenausnehmung (14, 115 anliegt wobei die vordere Seitenwand der Innenausnehmung, welche die Innenausnehmung (14, 115) entgegen der Einsteckrichtung begrenzt, eine Hohlkegelfläche (20, 118) ist, deren Durchmesser in der Einsteckrichtung zunimm.

2. Steckverbindung nach Anspruch 1, **dadurch gekennzeichnet, dass** das Abstützelement (4, 123) und/oder das Haltelement (3, 122) ein geschlitzter Ring aus einem Federmaterial, z.B. Federstahl, Federbronze oder Kunststoff ist.

3. Steckverbindung nach Anspruch 2, **dadurch gekennzeichnet, dass** der geschlitzte Ring einen kreisrunden Querschnitt hat.

4. Steckverbindung nach einem der vorhergehenden Ansprüche, **dadurch gekennzeichnet, dass** die in Steckrichtung gesehen hintere Seitenwand der Innenausnehmung eine kegelförmige Anlagefläche (21) aufweist.

5. Steckverbindung nach einem der vorhergehenden Ansprüche, **dadurch**
**gekennzeichnet, dass** zwischen dem in Steckrichtung gesehen vorderen Ende der Öffnung (10) und der Innenausnehmung (14) im Außenteil (2)
der Innendurchmesser der Öffnung (10) geringfügig größer ist als der Außendurchmesser, den das Abstützelement (4) hat, wenn es in der Außenausnehmung (7, 105) des Steckzapfens (5) angeordnet ist, so dass ein auf den Steckzapfen (5) aufsetzbares Lösewerkzeug (25) vorgesehen ist, das durch das in Steckrichtung gesehen vordere Ende der Öffnung (10) im Außenteil (2) in die Innenausnehmung (14) hineinbewegbar ist.

6. Steckverbindung nach einem der vorhergehenden Ansprüche, **dadurch gekennzeichnet, dass** das Innenteil (1, 101) ein gezogenes Rohr ist und durch Kaltverformen des Rohres die Außenausnehmung (7, 105) gebildet ist.

7. Steckverbindung nach Anspruch 6, **dadurch gekennzeichnet, dass** der Außendurchmesser des als Steckzapfen (5) ausgebildeten Endes des gezogenen Rohrs durch nachträgliches Kaltverformen auf ein genaues Passungsmaß kalibriert ist.

8. Steckverbindung nach einem der vorhergehenden Ansprüche, **dadurch gekennzeichnet, dass** das Außenteil (2) In der Öffnung (10) beiderseits der Innenausnehmung (14) und im Abstand von dieser Ringnuten (15, 16) aufweist, in denen Dichtringe (18, 19) angeordnet sind. 1 bis 3 oder 5 bis 7

9. Steckverbindung nach einem der Ansprüche 1 bis 3 oder 5 bis 7, **dadurch gekennzeichnet, dass** in der Innenausnehmung (115) in Einsteckrichtung gesehen hinter dem Halteelement (122) und dem Abstützelement (123) ein axial bewegliches Stützelement und hinter dem Stützelement ein elastisch verformbarer Dichtring (126) angeordnet sind, wobei der Dichtring (126) sich radial an einer Wand und in Einsteckrichtung an einer Schulter (127) der Innenausnehmung (115) abstützt und zur Abdichtung des Innenteils (101) im Außenteil (102) ausgebildet ist und wobei der Abstand zwischen der Schulter (127) und der Hohlkegelfläche (118) und die axialen Abmessungen von Halteelement (122), Abstützelement (123), Stützelement und Dichtring (126) so aufeinander abgestimmt sind, dass sie zwischen der Schulter (127) und der Hohlkegelfläche (118) spielfrei aneinander anilegend gehalten sind.

10. Steckverbindung nach Anspruch 9, **dadurch gekennzeichnet, dass** das Stützelement eine dem Dichtring (126) benachbarte Stützscheibe (125) aus Kunststoff und eine dem Abstützelement (123) benachbarte Distanzscheibe (124) aus Metall aufweist.

11. Steckverbindung nach einem der Ansprüche 9 oder 10, **dadurch gekennzeichnet, dass** die Hohlkegelfläche (118) von einer Stirnwand (117) des Außenteils (102) gebildet ist, die im Anschluss an das Einsetzen des Halteelements, des Stützelements und des Dichtrings (126) durch radiales plastisches Umformen das Außenteils (102) gebildet ist.

12. Steckverbindung nach einem der Ansprüche 9 bis 11,**dadurch gekennzeichnet, dass** das Außenteil (102) mittels einer Überwurfmutter (111) an einem Anschlussteil (110) befestigt ist, wobei die Überwurfmutter (111) an der Außenseite der Stirnwand (117) anliegt.

## Claims

1. A plug coupling for pipes, with a female member (2) and a male member (1, 101) connectable to and separable from each other, wherein
the female member (2, 202) comprises an opening (10) and in said opening (10) an inner recess (14, 115) which accommodates, prior to coupling of the male member (1, 101) with the female member (2), an annular retaining element (3, 122) elastically deformable in a radial direction and an annular supporting element (4, 123) elastically deformable in a radial direction,
the male member (1, 101) has an end configured as a pin plug (5) that is insertable into the opening (10) of the female member (2) and includes an outer recess (7, 105),
the outer recess (7, 105) accommodates, when the male member (1, 101) is coupled with the female member (2, 102), the annular supporting element (4, 123) elastically deformable in a radial direction, which with a radially outer portion protrudes from the outer recess (7, 105) and forms a shoulder capable of supporting the retaining element (3, 122) in such a way that the pin plug is locked against withdrawal from the opening (10) by the retaining element (3, 122),
the inner recess (14, 115) is dimensioned to be able to accommodate the retaining element (3, 122) and the supporting element (4, 123) jointly when the pin plug of the male member (1, 101) extends through the inner recess (14, 115) with the portion lying ahead of the outer recess (4, 123) in the plug-in direction, and wherein the end of the pin plug leading in the plug-in direction has a conical locating surface (6, 104) which tapers in forward direction and whose smallest diameter is smaller than the smallest diameter of the supporting element (4, 123), wherein the retaining element (3, 122) has an inner diameter equal to or somewhat smaller than the outer diameter of the pin plug (5), so that the retaining element (3, 122) endeavours to embrace the pin plug (5) in the area of its outer diameter in a close fit or with little bias, wherein the supporting element (4, 123) has an inner diameter smaller than the inner diameter of the retaining element (3, 122) and slightly smaller than the smallest diameter of the outer recess (7, 105), so that in the locked position the supporting element (4, 123) snaps into the outer recess (7, 105) and rests against the wall of the outer recess (7, 105) with little bias, and wherein, in the locked position, the retaining element (3, 122) rests against the supporting element (4, 123), against the pin plug (5) in the area of its outer diameter, and against the forward side wall of the inner recess (14, 115) bounding the inner recess (14, 115) in opposition to the plug-in direction of the pin plug (5), wherein the forward side wall of the inner recess, which bounds the inner recess (14, 115) in opposition to the plug-in direction, is a hollow conical surface (20, 118) increasing in diameter in the plug-in direction.

2. The plug coupling according to claim 1, **characterized in that** the supporting element (4, 123) and/or the retaining element (3, 122) is a slotted ring made from a spring material, for example, spring steel, spring bronze or plastics.

3. The plug coupling according to claim 2, **characterized in that** the slotted ring is circular in cross-section.

4. The plug coupling according to any one of the preceding claims, **characterized in that** the rear side wall of the inner recess as seen in the plug-in direction includes a conical abutment surface (21).

5. The plug coupling according to any one of the preceding claims, **characterized in that**, between the forward end of the opening (10) as seen in the plug-in direction and the inner recess (14) in the female member (2), the inner diameter of the opening (10) is slightly greater than the outer diameter of the supporting element (4) when located in the outer recess (7, 105) of the pin plug (5), so that an uncoupling tool (25) adapted to be applied to the pin plug (5) is provided for insertion into the inner recess (14) through the forward end of the opening (10) in the female member (2) as seen in the plug-in direction.

6. The plug coupling according to any one of the preceding claims, **characterized in that** the male member (1, 101) is a drawn pipe and the outer recess (7, 105) is formed by cold-forming the pipe.

7. The plug coupling according to claim 6, **characterized in that** the outer diameter of the end of the drawn pipe formed as pin plug (5) is finished to a precise fit by a subsequent cold-forming process.

8. The plug coupling according to any one of the preceding claims, **characterized in that**, in the opening (10) on either side of the inner recess (14) and at a distance therefrom, the female member (2) includes annular grooves (15, 16) receiving gasket rings (18, 19).

9. The plug coupling according to any one of the claims 1 to 3 or 5 to 7, **characterized in that** there are arranged, in the inner recess (115) behind the retaining element (122) and the supporting element (123) as seen in the plug-in direction, an axially movable bearing element and behind said bearing element an elastically deformable gasket ring (126), wherein the gasket ring (126) takes support radially upon a wall and in the plug-in direction upon a shoulder (127) of the inner recess (115) and is formed to seal the male member (101) in the female member (102), and wherein the distance between the shoulder (127) and the hollow conical surface (118) and the axial dimensions of retaining element (122), supporting element (123), bearing element and gasket ring (126) are coordinated with each other such as to be held in zero-play relative abutment between the shoulder (127) and the hollow conical surface (118).

10. The plug coupling according to claim 9, **characterized in that** the bearing element includes a plastic bearing plate (125) adjacent to the gasket ring (126) and a metal spacer (124) adjacent to the supporting element (123).

11. The plug coupling according to any one of the claims 9 or 10, **characterized in that** the hollow conical surface (118) is formed by an end wall (117) of the female member (102), which is formed subsequent to insertion of the retaining element, the bearing element and the gasket ring (126) by radial plastic deformation of the female member (102).

12. The plug coupling according to any one of the claims 9 to 11, **characterized in that** the female member (102) is secured to a union piece (110) by means of a union nut (111), said union nut (111) resting against the outside of the end wall (117).

## Revendications

1. Assemblage par emboîtement pour conduites comprenant une partie extérieure (2) et une partie intérieure (1, 101) pouvant être reliées ensemble et séparées l'une de l'autre,
la partie extérieure (2, 202) comprenant une ouverture (10) et dans l'ouverture (10) un évidement intérieur (14, 115) dans lequel sont disposés, avant l'assemblage de la partie intérieure (1, 101) à la partie extérieure (2), un élément de retenue (3, 122) annulaire élastiquement déformable dans la direction radiale et un élément d'appui (4, 123) annulaire élastiquement déformable dans la direction radiale,
la partie intérieure (1, 101) présentant une extrémité conçue comme un tenon d'emboîtement (5), laquelle extrémité peut être insérée dans l'ouverture (10) de la partie extérieure (2) et comprend un évidement extérieur (7, 105),
l'élément d'appui (4, 123) annulaire élastiquement déformable dans la direction radiale étant disposé dans l'évidement extérieur (7, 105), lorsque la partie intérieure (1, 101) est assemblée à la partie extérieure (2, 102), et saillant de l'évidement extérieur (7, 105) avec une zone radialement extérieure et formant un épaulement sur lequel l'élément de retenue (3, 122) peut s'appuyer de telle sorte que le tenon d'emboîtement est empêché d'être retiré de l'ouverture (10) par l'élément de retenue (3, 122),
l'évidement intérieur (14, 115) étant dimensionné de sorte que l'élément de retenue (3, 122) et l'élément d'appui (4, 123) peuvent être logés ensemble dans l'évidement intérieur (14, 115) lorsque le tenon d'emboîtement de la partie intérieure (1, 101) s'étend avec la partie située devant l'évidement extérieur (4, 123), considéré dans la direction d'emboîtement, à travers l'évidement intérieur (14, 115), et l'extrémité avant du tenon d'emboîtement, considéré dans la direction d'emboîtement, présentant une surface de centrage conique (6, 104) qui se rétrécit vers l'avant et dont le plus petit diamètre est inférieur au plus petit diamètre de l'élément d'appui (4, 123),
l'élément de retenue (3, 122) présentant un diamètre intérieur légèrement inférieur ou égal au diamètre extérieur du tenon d'emboîtement (5), de sorte que l'élément de retenue (3, 122) tend à enserrer étroitement ou avec une légère précontrainte le tenon d'emboîtement (5) dans la zone de son diamètre extérieur, l'élément d'appui (4, 123) présentant un diamètre intérieur inférieur au diamètre intérieur de l'élément de retenue (3, 122) et légèrement inférieur au plus petit diamètre de l'évidement extérieur (7, 105), de sorte que l'élément d'appui (4, 123), dans la position verrouillée, pénètre dans l'évidement extérieur (7, 105) et repose avec une légère précontrainte contre la paroi de l'évidement extérieur (7, 105), et l'élément de retenue (3, 122), dans la position verrouillée, reposant contre l'élément d'appui (4, 123), contre le tenon d'emboîtement (5) dans la zone de son diamètre extérieur et contre la paroi latérale avant de l'évidement intérieur (14, 115) délimitant l'évidement intérieur (14, 115) à l'opposé de la direction d'emboîtement du tenon d'emboîtement (5),
la paroi latérale avant de l'évidement intérieur qui délimite l'évidement intérieur (14, 115) à l'opposé de la direction d'emboîtement étant une surface conique creuse (20, 118) dont le diamètre augmente dans la direction d'emboîtement.

2. Assemblage par emboîtement selon la revendication 1, **caractérisé en ce que** l'élément d'appui (4, 123) et/ou l'élément de retenue (3, 122) est une bague fendue réalisée dans un matériau ressort, par exemple en acier à ressorts, en bronze à ressorts ou en matière plastique.

3. Assemblage par emboîtement selon la revendication 2, **caractérisé en ce que** la bague fendue présente une section transversale ronde.

4. Assemblage par emboîtement selon l'une des revendications précédentes, **caractérisé en ce que** la paroi latérale arrière de l'évidement intérieur, considéré dans la direction d'emboîtement, présente une surface d'appui conique (21).

5. Assemblage par emboîtement selon l'une des revendications précédentes, **caractérisé en ce qu'**entre l'extrémité avant de l'ouverture (10), considéré dans la direction d'emboîtement, et l'évidement intérieur (14) dans la partie extérieure (2), le diamètre intérieur de l'ouverture (10) est légèrement supérieur au diamètre extérieur que présente l'élément d'appui (4) lorsqu'il est disposé dans l'évidement extérieur (7, 105) du tenon d'emboîtement (5), de sorte qu'il est prévu un outil de desserrage (25) pouvant être placé sur le tenon d'emboîtement (5) et pouvant être déplacé à travers l'extrémité avant de l'ouverture (10), considéré dans la direction d'emboîtement, dans la partie extérieure (2) jusqu'à l'évidement intérieur (14).

6. Assemblage par emboîtement selon l'une des revendications précédentes, **caractérisé en ce que** la partie intérieure (1, 101) est un tube obtenu par filage et l'évidement extérieur (7, 105) est formé par façonnage à froid du tube.

7. Assemblage par emboîtement selon la revendication 6, **caractérisé en ce que** le diamètre extérieur de l'extrémité du tube obtenu par filage conçue comme un tenon d'emboîtement (5) est calibré à une cote d'ajustement précise par façonnage à froid ultérieur.

8. Assemblage par emboîtement selon l'une des revendications précédentes, **caractérisé en ce que** la partie extérieure (2) comprend dans l'ouverture (10) de part et d'autre de l'évidement intérieur (14) et à distance de celui-ci des rainures annulaires (15, 16) dans lesquelles sont disposées des bagues d'étanchéité (18, 19).

9. Assemblage par emboîtement selon l'une des revendications 1 à 3 ou 5 à 7, **caractérisé en ce que** dans l'évidement intérieur (115) sont disposés un élément de soutien axialement mobile, derrière l'élément de retenue (122) et l'élément d'appui (123), considéré dans la direction d'emboîtement, et derrière l'élément de soutien, considéré dans la direction d'emboîtement, une bague d'étanchéité (126) élastiquement déformable, la bague d'étanchéité (126) s'appuyant radialement contre une paroi et dans la direction d'emboîtement contre un épaulement (127) de l'évidement intérieur (115) et étant conçue pour étanchéifier la partie intérieure (101) dans la partie extérieure (102) et l'écart entre l'épaulement (127) et la surface conique creuse (118) et les dimensions axiales de l'élément de retenue (122), de l'élément d'appui (123), de l'élément de soutien et de la bague d'étanchéité (126) étant ajustés les uns aux autres de sorte qu'ils sont retenus adjacents les uns aux autres sans jeu entre l'épaulement (127) et la surface conique creuse (118).

10. Assemblage par emboîtement selon la revendication 9, **caractérisé en ce que** l'élément de soutien comprend une rondelle d'appui (125) en matière plastique adjacente à la bague d'étanchéité (126) et une rondelle d'écartement (124) en métal adjacente à l'élément d'appui (123).

11. Assemblage par emboîtement selon l'une des revendications 9 ou 10, **caractérisé en ce que** la surface conique creuse (118) est formée par une paroi frontale (117) de la partie extérieure (102) formée à la suite de l'insertion de l'élément de retenue, de l'élément de soutien et de la bague d'étanchéité (126) par façonnage radial plastique de la partie extérieure (102).

12. Assemblage par emboîtement selon l'une des revendications 9 à 11, **caractérisé en ce que** la partie extérieure (102) est fixée à une partie de raccordement (110) au moyen d'un écrou-raccord (111), l'écrou-raccord (111) reposant contre la face extérieure de la paroi frontale (117).
